# EUROPEAN PATENT APPLICATION

(11) **EP 1 767 584 A1**
(43) Date of publication of application: **28.03.2007**
(21) Application number: 05765666.2
(22) Date of filing: 13.07.2005
(51) Int. Cl.: C08L 101/10, C08J 3/20, C08L 71/02, C08L 77/00

(54) **PROCESS FOR PRODUCING CURABLE RESIN COMPOSITION**

(30) Priority: 14.07.2004 JP 2004207883
(71) Applicant: Kaneka Corporation, Kita-ku Osaka-shi, Osaka 530-8288 (JP); KANEKA BELGIUM N.V., 2260 Westerlo-Oevel (BE)
(72) Inventor: Masaoka, Yoshiteru, Kaneka Corporation, Takasago-shi, Hyogo 6768688 (JP)
(74) Representative: Hart Davis, Jason
(86) International application number: PCT/JP2005/012901
(87) International publication number: WO 2006/006620

(57) **Abstract**

The present invention has its object to provide a production process of curable resin compositions having thixotropy and comprising an organic polymer containing a reactive silyl group with good productivity and high production efficiency.

Furthermore, the present invention provides a process for producing a curable resin composition which comprises at least two steps, namely the mixing step (A) of mixing an organic polymer (a) having at least one reactive silyl group in each molecule with a thixotropic agent (b) and the filling step (B) of packing the mixture obtained in the above step (A) into containers, and the mixture is subjected to heat treatment at a temperature exceeding the temperature in the mixing up in the above step (A) in the filling step (B) and/or after the filling step (B).

## Description

### TECHNICAL FIELD

The present invention relates to a process for producing a curable resin composition excellent in thixotropy.

### BACKGROUND ART

Heretofore, in producing sealants and the like using an organic polymer containing at least one reactive silyl group in each molecule thereof, it has been necessary to add a relatively large amount of thixotropic agent, followed by heat treatment at relatively high temperature in a kneader to cause the performance of the thixotropic agent added, as described in Patent Document 1, in view of the relatively high level of thixotropy required from the viewpoint of workability on the occasion of application. Thus, in the art, the formulation is stirred in a kneader while heating the same to the temperature at which the thixotropic agent is activated and, after sufficient activation of the thixotropic agent, the formulation is cooled by cooling treatment to the temperature at which the formulation can be applied by filling, and then packed into containers for sale as products. However, this process requires a long period of time for raising and cooling the kneader temperature and prolongs the period of occupation of the kneader, which is expensive; thus, a problem arises, namely the production efficiency is very poor.

Patent Document 1 :Japanese Kokai publication Hei-05-287187 (paragraph 0029)

### SUMMARY OF THE INVENTION

It is an object of the present invention to provide a process for producing a curable resin composition, sealant or the like excellent in thixotropy with high production efficiency.

The present inventors made intensive investigations to accomplish the above object and, as a result, found that when the thixotropy of the formulation are not allowed to substantially manifest themselves in the kneader but the thixotropic agent is activated to thereby allow the thixotropy to manifest themselves by subjecting the formulation to heat treatment during packing the formulation taken out of the kneader into containers or after packing, or during packing and after packing, a curable composition, sealant or the like excellent in thixotropy can be obtained in a short period of use of the kneader (namely with good production efficiency). Based on such and other findings, they have now completed the present invention.

Thus, the present invention relates to
a process for producing a curable resin composition
which comprises at least two steps, namely the mixing step (A) of mixing an organic polymer (a) having at least one reactive silyl group in each molecule with a thixotropic agent (b) and the filling step (B) of packing the mixture obtained in the above step (A) into containers, and
the mixture is subjected to heat treatment at a temperature exceeding the temperature in the mixing up in the above step (A) in the filling step (B) and/or after the filling step (B).

For the above-mentioned heat treatment, the heat treatment step (C) of heating the containers filled with the mixture may be carried out after the filling step (B), or in the filling step (B). Further, the heat treatment may be carried out in both of these steps.

The temperature of the curable resin composition on the occasion of mixing in the mixing step (A) is preferably not higher than 80 degrees centigrade.

The temperature of the curable resin composition during heat treatment is preferably not lower than 50 degrees centigrade but preferably not higher than the melting point of the thixotropic agent (b).

Further, the thixotropic agent (b) preferably is a polyamide wax and/or a polyamide wax derivative, and the main chain skeleton of the organic polymer (a) is preferably a polyoxyalkylene polymer.

In the following, the production process of the invention is described.

### DETAILED DESCRIPTION OF THE INVENTION

The production process of the invention is characterized in that it comprises at least two steps, namely the mixing step (A) of mixing an organic polymer (a) having at least one reactive silyl group in each molecule with a thixotropic agent (b) and the filling step (B) of packing the mixture obtained in the above step (A) into containers, and the mixture is subjected to heat treatment at a temperature exceeding the temperature in the mixing up in the above step (A) in the filling step (B) and/or after the filling step (B).

### <(A) Mixing step>

In the step (A), an organic polymer (a) having at least one reactive silyl group in each molecule and a thixotropic agent (b) are mixed up.

On that occasion, the organic polymer (a) may be used in the form of a mixture with a third component(s) preliminarily added thereto and mixed therewith, or the organic polymer (a), thixotropic agent (b) and the third component (s) may be mixed up simultaneously. Further, the third component(s) may be mixed with the mixture obtained in the step (A). As the third component(s), there may be mentioned, for example, those various components described later herein other than the organic polymer (a) and thixotropic agent (b).

From the viewpoint of securing the stability of the curable resin composition after storage, it is preferred that physical dehydration treatment and/or chemical dehydration treatment be carried out during mixing.

The dehydration treatment can be carried out in the manner of physical dehydration treatment, for example, by reducing the pressure inside the vessel by means of a vacuum pump during kneading, or in the manner of chemical dehydration treatment, for example, by adding a silane coupling agent or a curing agent, each to be described later herein.

In the step (A), positive heating is preferably made to facilitate the mixing, although the mixing operation is accompanied by some heat generation. On that occasion, it is important to suppress the activation of the thixotropic agent (b) as far as possible. Specifically, the mixing temperature is controlled so as to prevent overheating.

The temperature of the curable resin composition on the occasion of mixing in the step (A) is preferably not higher than 80 degrees centigrade, more preferably not higher than 75 degrees centigrade, still more preferably not higher than 60 degrees centigrade. When the temperature of the curable resin composition on the occasion of mixing exceeds 80 degrees centigrade, the thixotropy of the composition after completion of the step (A) may increase, sometimes making it difficult to pack the composition into containers in the next step (B).

When, conversely, the temperature of the curable resin composition on the occasion of mixing is excessively low, high torque is required for stirring/mixing and the stirring/mixing efficiency declines, so that the production efficiency rather falls in some instances. Therefore, that temperature is preferably not lower than 20 degrees centigrade, more preferably not lower than 30 degrees centigrade, still more preferably not lower than 40 degrees centigrade, particularly preferably not lower than 45 degrees centigrade.

The period of mixing in the step (A) is not particularly restricted but, from the dispersibility and productivity viewpoint, it is preferably 20 minutes to 5 hours, more preferably 30 minutes to 3 hours.

As for the method of mixing, any mixing method may be employed without any particular restriction; thus, a common stirrer/mixer can be used. Specifically, a single-screw stirrer, a twin-screw stirrer, a triple-screw stirrer, or a single-screw, twin-screw or triple-screw stirrer of the planetary type in which each stirring screw rotates and revolves. Among these stirrers, those stirrers producing kneading effects are preferred.

### <Filling step (B)>

The step (B) is the step of packing the mixture obtained in the above-mentioned mixing step (A) into containers. As for the method of packing, any appropriate method can be employed without any particular restriction; thus, a common filling machine may be used. Specifically, there may be mentioned, for example, the method comprising discharging the mixture in a stirring tank therefrom by means of a hydraulic ram to fill containers with the composition discharged. When heating is performed in the step (A), the viscosity becomes low and the filling procedure can be performed with ease and, therefore, the mixture may be submitted to the filling step (B) while the temperature of the mixture is not lowered, or the mixture once cooled may be submitted to the filling step (B) . The route from the stirring tank to the containers to be filled may be cylindrical, or may be a static mixer-like one so that a small amount(s) of an additive(s) such as a silane coupling agent and/or a curing catalyst to be mentioned later herein may be added and mixed therein.

The filling step (B) may be a heating/filling step in which the mixture is packed under heat treatment.

As an example of realization of heating/filling, there may be mentioned, among others, the method comprising heating the mixture in the middle of the filling step.

The temperature of the curable resin composition on that occasion of heat treatment should exceed the temperature on the occasion of mixing in the step (A) . It is preferably not lower than 50 degrees centigrade, more preferably not lower than 60 degrees centigrade, still more preferably not lower than 70 degrees centigrade. Also preferably, it is not higher than the melting point of the thixotropic agent (b). More preferably, the temperature of the curable resin composition on the occasion of heating/filling is not lower than the temperature at which the thixotropic agent (b) in the composition is activated and not higher than the melting point of the thixotropic agent. In selecting the temperature of the curable resin composition on the occasion of heating/filling, it is necessary to take the heat resistance temperature of the containers to be filled into consideration.

The time of residence under heating in the heating/filling step is not particularly restricted but, from the thixotropic agent activation and productivity viewpoint, it is preferably 0.1 second to 1 hour, more preferably 1 second to 30 minutes.

As typical examples of the containers to be used for packing, there may be mentioned plastic containers generally used as cartridges for sealants as well as paper, laminate, metal composite foil containers. The containers used are heated in the subsequent step and, therefore, those containers which are too low in heat resistance are unfavorable.

The heat resistance temperature of the containers is preferably not lower than 70 degrees centigrade, more preferably not lower than 90 degrees centigrade, still more preferably not lower than 110 degrees centigrade.

The containers to be used for packing are preferably made of a material high in thermal conductivity so as to enable efficient heat treatment; thus, for example, containers made of a metal such as aluminum may be mentioned.

### <Step (C) of heat treatment in containers>

The step (C) is the heat treatment step in which the mixture packed in containers is subjected, together with the containers, to heat treatment.

The mixture may be subjected to heat treatment in the heat treatment step (C) following the filling step (B). Alternatively, the mixture may be subjected to heat treatment in the filling step (B) and further to heat treatment in the heat treatment step (C) following the filling step (B).

The temperature of the curable resin composition on that occasion of heat treatment should be above the temperature on the occasion of mixing in the step (A). It is preferably not lower than 50 degrees centigrade, more preferably not lower than 60 degrees centigrade, still more preferably not lower than 70 degrees centigrade. Preferably, it is not higher than the melting point of the thixotropic agent (b) . More specifically, the temperature of the curable resin composition during heat treatment is preferably within the temperature range which is not lower than the temperature at which the thixotropic agent (b) in the composition is activated and not higher than the melting point of the thixotropic agent. In selecting the temperature of the curable resin composition on the occasion of heat treatment, it is necessary to take the heat resistance temperature of the containers to be filled into consideration.

The time of heating in the heat treatment step is not particularly restricted but, from the viewpoint of thermal conductivity of the curable resin composition and from the productivity viewpoint, it is preferably 1 second to 5 hours, more preferably 10 seconds to 4 hours.

As for the mode of heating, the filled containers may be heated one by one or a plurality thereof may be heated together.

As for the method of heating, the batchwise heating method or the method comprising heating containers while continuously conveying them, for instance, may be employed. The heat source is not particularly restricted but mention may be made of hot air heating, infrared-ray heating and electromagnetic heating, among others.

In the above-mentioned production process of the invention, the temperature of the curable resin composition in each step can be measured by inserting a thermocouple of a thermocouple type digital thermometer directly into the curable composition.

### <Curable resin composition>

Now, the components in the curable resin composition to be produced in accordance with the invention are described.

The main chain skeleton of the organic polymer (a) having at least one reactive silyl group in each molecule, which is to be used in the practice of the invention, is not particularly restricted but ones variegated in main chain skeleton can be used.

As the main chain skeleton of (a), there may specifically be mentioned polyoxyalkylene polymers such as polyoxyethylene, polyoxypropylene, polyoxybutylene, polyoxytetramethylene, polyoxyethylene-polyoxypropylene copolymers and polyoxypropylene-polyoxybutylene copolymers; hydrocarbon polymers such as ethylene-propylene copolymers, polyisobutylene, copolymers of isobutylene and isoprene or the like, polychloroprene, polyisoprene, polybutadiene, copolymers of isoprene or butadiene and acrylonitrile and/or styrene or the like, and hydrogenated polyolefin polymers obtained by hydrogenation of such polyolefin polymers as mentioned above; polyester polymers obtained by condensation of a dibasic acid, such as adipic acid, with a glycol or ring opening polymerization of lactones; acrylic ester polymers such as polyacrylates obtained by radical polymerization of such monomers as ethyl acrylate and butyl acrylate, and acrylic ester copolymers derived from an acrylic ester(s), such as ethyl acrylate and/or butyl acrylate, and vinyl acetate, acrylonitrile, methyl methacrylate, styrene, etc.; graft polymers obtained by polymerization of a vinyl monomer(s) in the organic polymers enumerated hereinabove; polysulfide polymers; polyamide polymers such as polyamide 6 resulting from ring opening polymerization of ε-caprolactam, polyamide 6·6 resulting from polycondensation of hexamethylenediamine and adipic acid, polyamide 6·10 resulting from polycondensation of hexamethylenediamine and sebacic acid, polyamide 11 resulting from polycondensation of ε-aminoundecanoic acid, polyamide 12 resulting from ring opening polymerization of ε-aminolaurolactam, and copolyamides having, as components thereof, two or more of the polyamides mentioned above; polycarbonate polymers produced by polycondensation of bisphenol A and carbonyl chloride, for instance, and diallyl phthalate polymers, among others.

Preferred among the polymers having the above-mentioned main chain skeletons are polyester polymers, acrylic ester polymers, acrylic ester copolymers, polyoxyalkylene polymers, hydrocarbon polymers and polycarbonate polymers, among others.

More preferred is one substantially containing a repeating unit represented by the general formula (1):

-R¹-O- (1)

(wherein R¹ represents a divalent organic group and preferably a linear or branched alkylene group having 1 to 14 carbon atoms) .

"Substantially" here means the main chain repeating unit represented by the general formula (1) existing in the main chain skeleton of (a) is not higher than 60% by weight, more preferably not higher than 80% by weight.

R¹ in the general formula (1) is preferably a linear or branched alkylene group having 1 to 14 carbon atoms and more preferably 2 to 4 carbon atoms.

Specific examples of the repeating units represented by the general formula (1) are as follows, for example. 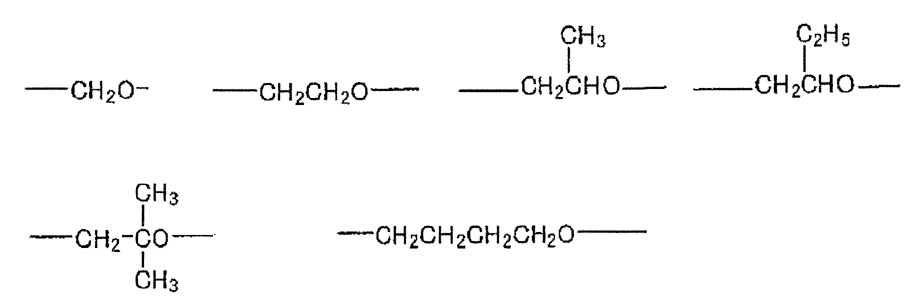 The main chain skeleton of the polyoxyalkylene polymer may contain only one kind of repeating unit or two or more kinds of repeating units. Particularly, in the case of using it for a sealant or adhesive etc., a polymer containing an oxypropylene as a main component is preferable.

A synthesis method of the polyoxyalkylene polymer may include, for example, a polymerization method using an alkaline catalyst such as KOH, a polymerization method using a transition metal compound-porphyrin complex catalyst obtained by causing reaction of an organic aluminum compound and porphyrin as described in Japanese Kokai Publication Sho-61-215623, a polymerization method using a double metal cyanide complex catalyst disclosed in, for example, Japanese Kokoku Publication Sho-46-27250 and Japanese Kokoku Publication Sho-59-15336, etc., however it is not limited to these examples.

The oxyalkylene polymers mentioned above may contain, within the main chain skeleton thereof, a urethane bond component or a like other component within a content range in which the characteristics of the oxyalkylene polymer will not be significantly impaired.

The urethane bond component is not particularly restricted but includes, among others, those resulting from the reaction between an aromatic polyisocyanate such as toluene-(tolylene) diisocyanate, diphenylmethanediisocyanate or xylylene diisocyanate, or an aliphatic polyisocyanate such as isophoronediisocyanate or hexamethylene diisocyanate, and the polyol having the repeating unit represented by the general formula (1) given above.

The reactive silyl group contained in the organic polymer (a) is a group having a silicon atom-bound hydroxyl or hydrolyzable group and capable of siloxane bond formation for crosslinking. As typical examples of the reactive silyl groups, there may be mentioned groups represented by the general formula (2) : 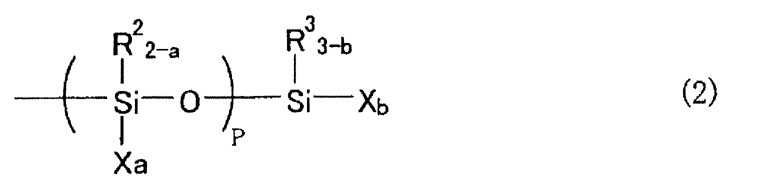 (wherein R² and R³ each represents an alkyl group containing 1 to 20 carbon atoms, an aryl group containing 6 to 20 carbon atoms, an aralkyl group containing 7 to 20 carbon atoms or a triorganosiloxy group represented by R⁴₃SiO- (in which R⁴ represents a monovalent hydrocarbon group containing 1 to 20 carbon atoms and the three R⁴ groups may be the same or different) and, where there exist two or more R² or R³ groups, they may be the same of different; X represents a hydroxyl group or a hydrolyzable group and, where there are two or more X groups, they may be the same or different; a represents 0, 1 or 2, b represents 0, 1, 2 or 3; the integers each represented by a in the p groups each represented by the general formula (3): 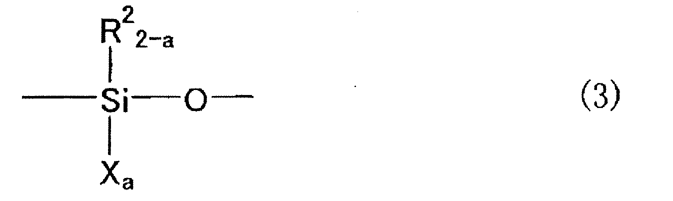 :are not necessarily identical; p represents an integer of 0 to 19, provided that the relation (sum of the integers a) + b ≥ 1 should be satisfied).

The hydrolysable group represented as X in the above description is not particularly limited and may include any conventionally known hydrolysable group. In particular, examples include a hydrogen atom, a halogen atom, an alkoxy, acyloxy, ketoxymate, amino, amido, acid amido, aminoxy, mercapto, alkenyloxy, and the like groups. Among them, a hydrogen atom, an alkoxy, acyloxy, keoxymate, amino, amido, aminoxy, mercapto, and alkenyloxy groups are preferable and in terms of moderate hydrolysability and handling easiness, an alkoxy group is particularly preferable.

One to three of these hydrolysable groups and hydroxyl groups may be bonded to one silicon atom and ((sum of the integers a) + b) is preferably in a range from 1 to 5. In the case where two or more hydrolysable groups and hydroxyl groups are bonded in the reactive silicon group, they may be same or different.

One or two or more silicon atoms may exist in the reactive silicon group and the number may be about 20 in the case of silicon atoms bonded by siloxane bonds and the like.

A reactive silicon group represented by the general formula (4): 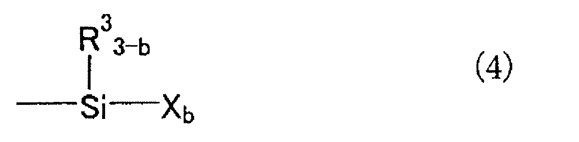 (wherein R³, X and b are as defined above; since, however, the sum of integers a is equal to 0, b is inevitably 1, 2 or 3) is preferable since it is made available.

Specific examples of R² and R³ in the above-mentioned general formulae (2), (3) and (4) are al kyl groups such as methyl group and ethyl group; cycloalkyl groups such as cyclohexyl group; aryl groups such as phenyl group; aralkyl groups such as benzyl group; and triorganosiloxy groups defined as (R⁴)₃SiO-(wherein R⁴ denotes methyl, phenyl, or the like group). Among them, methyl group is preferable.

As specific examples of the structure of the reactive silicon group, trimethoxysilyl, methyldimethoxysilyl, triethoxysilyl, methyldiethoxysilyl and the like groups are particularly preferred.

These reactive silicon groups may be used singly or two or more of them may be used in combination.

Introduction of the reactive silicon group may be carried out by a conventionally known method. That is, the following methods may be employed, for example.
(A) An organic polymer having an unsaturated group is obtained by causing reaction of an organic polymer having a functional group such as a hydroxyl group in a molecule with an organic compound having an active group reactive on the functional group and an unsaturated group. Alternatively, the organic polymer having an unsaturated group is obtained by copolymerization with an unsaturated group-containing epoxy compound. Successively, hydrosilylation is carried out by causing reaction of a reactive silicon group-containing hydrosilane on the obtained reaction product.
(B) A compound having a mercapto group and a reactive silicon group is reacted with the organic polymer having an unsaturated group obtained in the same manner as the method (A) .
(C) An organic polymer having a functional group such as a hydroxyl group, an epoxy group, and an isocyanato group in a molecule is reacted with a compound having a functional group reactive on the functional group and a reactive silicon group.

The method described as the method (A) and the method of causing reaction of a polymer having a terminal hydroxyl group and a compound having an isocyanate group and a reactive silicon group in the method (C) are preferable among the above-exemplified methods.

The time when the reaction between the hydroxyl-terminated polymer and the isocyanato group- and reactive silyl group-containing compound should be carried out is not particularly restricted but may be before the above-mentioned mixing step (A) or during the mixing step (A). Thus, the organic polymer (a) prepared in advance by carrying out the reaction prior to kneading may be used or, alternatively, the polymer (a) may be prepared by carrying out the reaction in the kneader in the presence of the thixotropic agent (b).

The (a) component polymer may be straight-chained or branched and has a number average molecular weight of about 500 to 60,000, more preferably 1,000 to 40,000.

The number average molecular weight can be determined on the polystyrene equivalent basis by measurement by gel permeation chromatograph (GPC), for instance.

The reactive silyl group content is at least one, preferably 1.1 to 5 groups, in each polymer molecule. When the number of reactive silyl groups contained in each molecule is below 1, the curability will become insufficient and, when it is greater than 5, the network structure will become dense, developing a tendency for the good mechanical characteristics to hardly manifest themselves.

As specific examples of the component (a) include those proposed in Japanese Kokoku Publication Sho-45-36319, Japanese Kokoku Publication Sho-46-12154, Japanese Kokai Publication Sho-50-156599, Japanese Kokai Publication Sho-54-6096, Japanese Kokai Publication sho-55-13767, Japanese Kokai Publication Sho-55-13468, Japanese Kokai Publication Sho-57-164123, Japanese Kokoku Publication Hei-3-2450, U.S. Patent No. 3,632,557, U.S. Patent No. 4,345,053, U.S. Patent No. 4,366,307, and U.S. Patent No. 4,960,844 etc., and also oxyalkylene polymers having a number average molecular weight of 6,000 or higher and a Mw/Mn ratio of 1.6 or lower and thus having high molecular weight and narrow molecular weight distribution as described in Japanese Kokai Publication Sho-61-197631, Japanese Kokai Publication Sho-61-215622, Japanese Kokai Publication Sho-61-215623, and Japanese Kokai Publication Sho-61-218632 can be exemplified, but not limited to these examples.

The above-mentioned organic polymers (a) having a reactive silicon group may be used each alone or two or more of them may be used in combination.

Furthermore, organic polymers obtained by blending vinyl polymers having a reactive silicon group may also be used.

Production methods of organic polymers by blending vinyl polymers having a reactive silicon group are proposed in Japanese Kokai Publication Sho-59-122541, Japanese Kokai Publication Sho-63-112642, Japanese Kokai Publication Hei-6-172631 and the like. A preferred specific example is a production method involving blending an organic polymer having a reactive silicon group with a copolymer having a reactive silicon group and a molecular chain substantially comprising an acrylic ester monomer unit and/or methacrylic ester monomer unit, which has an alkyl group of 1 to 8 carbon atoms and is represented by the following general formula (5): 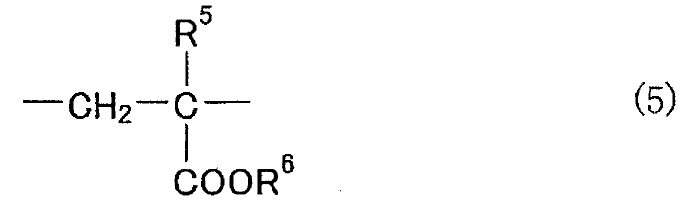 (wherein R⁵ represents a hydrogen atom or a methyl group; and R⁶ denotes an alkyl group having 1 to 8 carbon atoms), and an acrylic ester monomer unit and/or methacrylic ester monomer unit, which has an alkyl group of 10 or more carbon atoms and is represented by the following general formula (6): 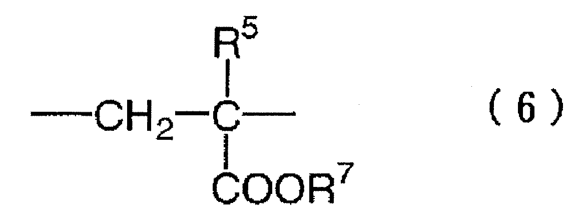 (wherein R⁵ represents the same as defined above; and R⁷ denotes an alkyl group having 10 or more carbon atoms).

Examples of R⁶ in the above-mentioned general formula (5) are alkyl groups having 1 to 8, preferably 1 to 4, and more preferably 1 or 2 carbon atoms such as methyl group, ethyl group, propyl group, n-butyl group, tert-butyl group, 2-ethylhexyl group and the like. The alkyl group standing for R⁶ may be a single alkyl group or two or more alkyl groups in combination.

Examples of R⁷ in the above-mentioned formula (6) are long chain alkyl groups having 10 or more, preferably 10 to 30, and more preferably 10 to 20 carbon atoms such as lauryl group, tridecyl group, cetyl group, stearyl group, behenyl group and the like. Same as the case of R⁶, the alkyl group standing for R⁷ may be a single alkyl group or two or more alkyl groups in combination.

The molecular chain of the vinyl copolymer substantially comprises the monomer units represented by the formulae (5) and (6) and "substantially" here means the total of the monomer units represented by the formulae (5) and (6) existing in the copolymer exceeds 50% by weight. The total of the monomer units represented by the formulae (5) and (6) is preferably 70% by weight or more.

The existence ratio of the monomer unit represented by the formula (5) and the monomer unit represented by the formula (6) is preferably from (95:5) to (40:60) and more preferably (90:10) to (60:40) on the basis of weight.

The monomer units which may be contained in the copolymer, other than those represented by the formulae (5) and (6), may include, for example, (meth)acrylic acid such as acrylic acid and methacrylic acid; amido group-containing monomers such as acrylamide, methacrylamide, N-methylolacrylamide, and N-methylolmethacrylamide, epoxy group-containing monomers such as glycidyl acrylate and glycidyl methacrylate, and amino group-containing monomers such as diethylaminoethyl acrylate, diethylaminoethyl methacrylate, and aminoethyl vinyl ether; and monomer units derived from acrylonitrile, styrene, α-methylstyrene, alkyl vinyl ether, vinyl chloride, vinyl acetate, vinyl propionate, and ethylene.

Preferably, from the easy handling viewpoint, the copolymer mentioned above has a number average molecular weight of 500 to 100,000.

The reactive silyl group which the copolymer has is represented by the general formula (7): 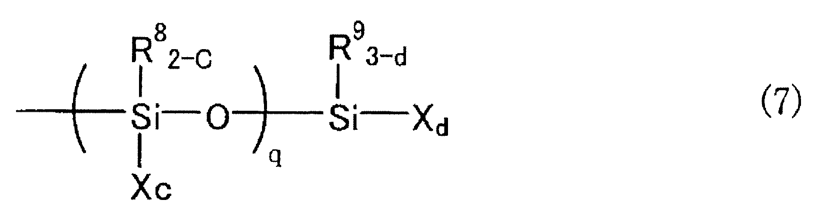 (wherein R⁸ and R⁹ each independently is a substituted or unsubstituted monovalent organic group containing 1 to 20 carbon atoms or a triorganosiloxy group, X's are the same or different and each represents a hydroxyl or hydrolyzable group, c is an integer of 0, 1 or 2 and d is an integer of 0, 1, 2 or 3, provided that the relation (sum of integers c) + d ≥ 1 should be satisfied; and q is an integer of 0 to 19). Preferred as the reactive silyl group from the economy viewpoint, among others, are groups represented by the general formula (8): 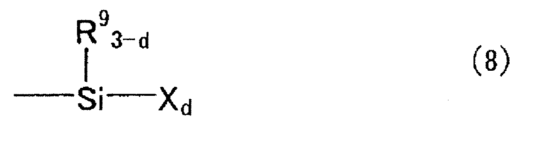 (wherein R⁹, X and d are as defined above; since, however, the sum of integers c is equal to 0, d is inevitably 1, 2 or 3).

For attaining a sufficient level of curability, the number of reactive silyl groups in one molecule of the copolymer mentioned above is on average not smaller than 1, preferably not smaller than 1.1, particularly preferably not smaller than 1.5.

Specific examples of the hydrolysable groups in the formula (7) include a hydrogen atom, a halogen atom, an alkoxy, acyloxy, ketoxymate, amino, amido, acid amido, aminoxy, mercapto, alkenyloxy, and the like groups. Among them, an alkoxy group such as methoxy and ethoxy groups is preferable in terms of moderate hydrolysability.

Specific examples of R⁸ and R⁹ in the formula (7) are alkyl groups such as methyl group and ethyl group; cycloalkyl groups such as cyclohexyl group; aryl groups such as phenyl group; aralkyl groups such as benzyl group; and the like. R⁸ and R⁹ may be a triorganosiloxy group defined as (R⁴)₃SiO- (wherein R⁴ denotes as defined above). Among them, methyl group is particularly preferable.

Further, a production method of the organic polymer obtained by blending the vinyl polymer having a reactive silicon group may also include a method of polymerizing a (meth) acrylic ester monomer in the presence of an organic polymer having a reactive silicon group. The methods are practically disclosed in Japanese Kokai Publication Sho-59-78223, Japanese Kokai Publication Sho-59-168014, Japanese Kokai Publication Sho-60-228516, Japanese Kokai Publication Sho-60-228517 and the like, however the method is not particularly limited to these exemplified methods.

Now, referring to the term "thixotropy", the term means such properties that the formulation readily changes the shape thereof and shows fluidity when a force is applied thereon from the outside, for example when it is extruded in a bead form from a cartridge, or applied or surface-finished with a spatula or the like, or applied by spraying, but once applied and allowed to stand, it hardly changes the shape thereof and hardly flows down.

An indicator of the thixotropy can be obtained from the ratio between low-speed apparent viscosity and high-speed apparent viscosity in viscosity measurement of the formulation. A greater (low-speed apparent viscosity) /(high-speed apparent viscosity) value is indicative of more remarkable thixotropy. The viscosities in question can be measured as described later herein.

As the thixotropic agent (b) to be used in the practice of the invention, there may be mentioned, for example, fatty acid amides, polyamide waxes and polyamide wax derivatives, typically DISPARON (product of Kusumoto Chemicals, Ltd.) and Crayvallac (product of CRAY VALLEY); hydrogenated castor oil, hydrogenated castor oil derivatives; polyesteramides; metal soaps such as calcium stearate, aluminum stearate and barium stearate; such organic compounds as 1,3,5-tris(trialkoxysilylalkyl)isocyanurates; and such inorganic compounds as fine-powder silica, carbon black, and calcium carbonate surface-treated with a fatty acid or resin acid; and the like.

The term "fine-powder silica" here includes, within the meaning thereof, silicon dioxide-based natural or artificial inorganic fillers. As specific examples, there may be mentioned kaolin, clay, activated clay, silica sand, silica stone, diatomaceous earth, anhydrous aluminum silicate, hydrous magnesium silicate, talc, pearlite, white carbon, fine mica powders, bentonite, and organic bentonite species. The organic bentonite species are powder-like substances mainly resulting from finely grinding montmorillonite minerals and surface-treated with one of various organic substances. Used as the organic substances are aliphatic primary amines, aliphatic quaternary amines (all preferably containing not more than 20 carbon atoms) and the like. As specific examples of such organic bentonite species, there may be mentioned Shiraishi Kogyo Kaisha, Ltd.' s Orben D and New D Orben, Tsuchiya Kaolin Co.'s HardSil, Burgess Pigment Company's Clay #30, Southern Clay Products, Inc.' s #33, and National Lead Company' s "Bentone 34" (dimethyloctadecylammonium bentonite), among others.

These thixotropic agents (b) may be used singly or two or more of them may be used in combination.

Among these thixotropic agents (b), fatty acid amides, polyamide waxes, polyamide wax derivatives, hydrogenated castor oil and hydrogenated castor oil derivatives, which have properties such that the thixotropy-imparting effect thereof manifest itself upon activation by heating, are more preferred. Among them, fatty acid amides, polyamide waxes and polyamide wax derivatives are more preferred from the composition's thermally stable thixotropy viewpoint, and polyamide waxes and polyamide wax derivatives are particularly preferred.

As specific commercially available examples of the fatty acid amides and polyamide waxes, there may be mentioned DISPARON 6500 (melting point: 126 degrees centigrade; product of Kusumoto Chemicals, Ltd.) and Crayvallac SL (melting point: 120 to 130 degrees centigrade; product of CRAY VALLEY), among others.

The melting point of the thixotropic agent (b) is not particularly restricted but, from the viewpoint of viscosity stability after storage and of easy activity availability, it is preferably 40 to 200 degrees centigrade, more preferably 50 to 150 degrees centigrade, still more preferably 60 to 150 degrees centigrade.

As for the addition amount of the thixotropic agent (b), the thixotropic agent (b) is preferably used in an amount of 0.1 to 50 parts by weight, more preferably 1 to 40 parts by weight, per 100 parts by weight of the organic polymer (a), in view of the cost and thixotropy.

Furthermore, the curable resin composition of the present invention may contain a silanol condensation catalyst capable of promoting the reaction of the reactive silyl group. Examples of such silanol condensation catalyst include, but are not limited to, titanic esters such as tetrabutyl titanate, tetrapropyl titanate, tetraisopropyl titanate and titanium tetraacetylacetonate; organotin compounds such as dibutyltin dilaurate, dibutyltin maleate, dibutyltin diacetate, stannous octylate, stannous dioctylate, stannous naphthenate, stannous stearate, stannous versatate, dibutyltin oxide-phthalic ester reaction products and dibutyltin diacetylacetonate; organoaluminum compounds such as aluminum trisacetylacetonate, aluminum tris(ethyl acetoacetate) and diisopropoxyaluminum ethyl acetoacetate; reaction products from a bismuth salt such as bismuth tris (2-ethylhexoate) or bismuth tris (neodecanoate) and an organic carboxylic acid or organic amine; chelate compounds such as zirconium tetraacetylacetonate and titanium tetraacetylacetonate; organolead compounds such as lead octylate; organoiron compounds such as iron naphthenate; organovanadium compounds; amine compounds such as butylamine, octylamine, laurylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethyl-aminomethyl)phenol, morpholine, N-methylmorpholine, 2-ethyl-4-methylimidazole and 1,8-diazabicyclo[5.4.0]undecene-7 (DBU) or salts thereof with carboxylic acids and the like; low-molecular-weight polyamide resins obtained from an excess of a polyamine and a polybasic acid; and reaction products from an excess of a polyamine and an epoxy compound. Thus, those condensation catalysts which are in conventional use can be used.

These silanol catalysts may be used singly or two or more of them may be used in combination.

Among these silanol condensation catalysts, organometallic compounds or combinations of organometallic compounds and amine type compounds are preferred from the curability viewpoint. Further, dibutyltin maleate, dibutyltin oxide-phthalic ester reaction products, and dibutyltin diacetylacetonate are preferred from the fast curing rate viewpoint. Further, the combined use of stannous dioctylate and laurylamine is preferred since it makes it possible to obtain curable resin compositions of high recovery. In particular, the addition of 0.5 to 10 parts by weight of stannous dioctylate and 0.1 to 10 parts by weight of laurylamine, per 100 parts by weight of the reactive silyl group-containing organic polymer (a) is preferred.

As for the general addition amount when a silanol condensation catalyst is used, the silanol condensation catalyst is used preferably in an amount of 0.01 to 40 parts by weight, more preferably 0.1 to 30 parts by weight, per 100 parts by weight of the reactive silyl group-containing organic polymer (a) from the cost and effect viewpoint.

In the curable resin composition of the invention, there may further be incorporated, if necessary, one or more of various additives such as fillers, plasticizers, colorants, silane coupling agents, epoxy resins, epoxy resin curing agents, reinforcing resins, storage stability improvers, antioxidants, ultraviolet absorbers, metal deactivators, antiozonants, light stabilizers, amine type radical scavengers, phosphorus-containing peroxide decomposers, lubricants, pigments and blowing agents.

Usable as the fillers are reinforcing fillers such as fumed silica, precipitated silica, silicic anhydride, hydrous silicic acid and carbon black; and such fillers as calcium carbonate, magnesium carbonate, diatomaceous earth, calcined clay, clay, talc, kaolin, titanium oxide, bentonite, organic bentonite, ferric oxide, zinc oxide, activated zinc white, glass balloons, shirasu balloons, organic balloons, organic fibers and inorganic fibers, among others.

In cases where high-strength cured products are to be obtained using these fillers, favorable results are obtained by using a filler mainly selected from among fumed silica, precipitated silica, silicic anhydride, hydrous silicic acid, carbon black, surface-treated finely divided calcium carbonate, calcined clay, clay and activated zinc white in an amount within the range of 1 to 200 parts by weight per 100 parts by weight of the organic polymer (a).

In cases where low-strength, high-elongation cured products are to be obtained, favorable results are obtained by using a filler mainly selected from among titanium oxide, calcium carbonate, magnesium carbonate, talc, ferric oxide, zinc oxide and shirasu balloons in an amount within the range of 5 to 500 parts by weight per 100 parts by weight of the organic polymer (a).

Of course, these fillers may be used singly or two or more of them may be used in combination.

As the plasticizers, there may be mentioned, phthalic esters such as diisodecyl phthalate, diundecyl phthalate, diisoundecyl phthalate, dioctyl phthalate, dibutyl phthalate and butyl benzyl phthalate; aliphatic dibasic acid esters such as dioctyl adipate, isodecyl succinate and dibutyl sebacate; glycol esters such as diethylene glycol dibenzoate and pentaerythritol esters; aliphatic esters such as butyl oleate and methyl acetylricinoleate; phosphoric esters such as tricresyl phosphate, trioctyl phosphate and octyl diphenyl phosphate; epoxy plasticizers such as epoxidized soybean oil, epoxidized linseed oil and benzyl epoxystearate; polyester type plasticizers such as polyesters derived from a dibasic acid and a dihydric alcohol; polyethers such as polypropylene glycol and derivatives thereof; polystyrenes such as poly-α-methylstyrene and polystyrene; polybutadiene, butadiene-acrylonitrile copolymers, polychloroprene, polyisoprene, polyisobutene, paraffinic hydrocarbons, naphthenic hydrocarbons, paraffin-naphthene mixed hydrocarbons, chlorinated paraffins and so forth.

These plasticizers may be used arbitrarily either singly or in the form of a mixture of two or more.

In the case of incorporation of such a plasticizer, the addition amount thereof is not particularly restricted but, from the bleeding out viewpoint, the plasticizer is used preferably in an amount of 1 to 200 parts by weight, more preferably 5 to 150 parts by weight, per 100 parts by weight of the organic polymer (a).

Further, the use of such a plasticizer in combination with a filler is effective in increasing the elongation of the cured products and/or making it possible to incorporate the filler in an increased amount.

Usable as the colorants are conventional inorganic pigments, organic pigments, dyes and so forth according to need.

In the case of incorporating such a colorant, the addition amount thereof is not particularly restricted but, from the cost and effect viewpoint, the colorant is used preferably in an amount of 0. 00001 to 50 parts by weight, more preferably 0. 0001 to 5 parts by weight, per 100 parts by weight of the organic polymers (a).

Specific examples of the silane coupling agents include, but are not limited to, amino group-containing silanes such as γ-aminopropyltrimethoxysilane, γ-aminopropyltriethoxysilane, γ-aminopropylmethyldimethoxysilane, N-(β-aminoethyl)-γ-aminopropyltrimethoxysilane, N-(β-aminoethyl)-γ-aminopropyltriethoxysilane, N-(β-aminoethyl)-γ-aminopropylmethyldimethoxysilane, and 1,3-diaminoisopropyltrimethoxysilane; epoxy group-containing silanes such as γ-glycidoxypropyltrimethoxysilane, γ-glycidoxypropyltriethoxysilane, γ-glycidoxypropylmethyldimethoxysilane and β-(3,4-epoxycyclohexyl)ethyltrimethoxysilane; mercapto group-containing silanes such as γ-mercaptopropyltrimethoxysilane and γ-mercaptopropyldimethoxysilane; vinylic unsaturated group-containing silanes such as vinyltrimethoxysilane, vinyltriethoxysilane, γ-methacryloyloxypropyltrimethoxysilane and γ-acryloyloxypropylmethyldimethoxysilane; chlorine atom-containing silanes such as γ-chloropropyltrimethoxysilane; isocyanato-containing silanes such as γ-isocyanatopropyltriethoxysilane and γ-isocyanatopropylmethyldimethoxysilane; hydrosilanes such as methyldimethoxysilane, trimethoxysilane and methyldiethoxysilane; alpha-silanes having a hetero atom on the carbon atom alpha to the silicon atom, for example (N-cyclohexylaminomethyl)methyldiethoxysilane, (N-cyclohexylaminomethyl)triethoxysilane, (N-phenylaminomethyl)methyldimethoxysilane, (N-phenylaminomethyl)trimethoxysilane, (methyacryloxymethyl)methyldimethoxysilane, (methacryloxymethyl)trimethoxysilane, (methacryloxymethyl)methyldiethoxysilane, (methacryloxymethyl)triethoxysilane, (isocyanatomethyl)methyldimethoxysilane, (isocyanatomethyl)trimethoxysilane and N-(trimethoxysilyl)-O-methyl carbamate; and so forth. These silane coupling agents may be used singly or two or more of them may be used in combination.

Such a silane coupling agent may also be used as a dehydrating agent or an adhesion promoter.

In the case of incorporating such a silane coupling agent, the addition amount thereof is not particularly restricted but, from the cost and effect viewpoint, the agent is used preferably in an amount of 0.01 to 30 parts by weight, more preferably 0.1 to 15 parts by weight, per 100 parts by weight of the organic polymer (a).

Specific examples of the epoxy resins include, but are not limited to, epichlorohydrin-bisphenol A epoxy resins, epichlorohydrin-bisphenol F epoxy resins, tetrabromobisphenol A glycidyl ether and like flame retardant epoxy resins, novolak epoxy resins, hydrogenated bisphenol A epoxy resins, bisphenol A-oxypropylene adduct glycidyl ether epoxy resins, p-hydroxybenzoic acid glycidyl ether ester epoxy resins, m-aminophenol-based epoxy resins, diaminodiphenylmethane-based epoxy resins, urethane-modified epoxy resins, various alicyclic epoxy resins, N,N-diglycidylaniline, N,N-diglycidyl-o-toluidine, triglycidyl isocyanurate, polyalkylene glycol diglycidyl ether, glycerol and like polyhydric alcohol glycidyl ethers, hydantoin-based epoxy resins, epoxidation products derived from unsaturated polymers such as petroleum resins. These epoxy resins may be used singly or two or more of them may be used in combination.

In the case of incorporation of such an epoxy resin, the addition amount thereof is not particularly restricted but, from the effect viewpoint, the resin is used preferably in an amount of 0.1 to 200 parts by weight, more preferably 1 to 150 parts by weight, per 100 parts by weight of the organic polymer (a) .

As the epoxy resin curing agents, there may be mentioned amine compounds and ketimine compounds, among others.

Specific examples of the amine compounds include, but are not limited to, butylamine, octylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo[5.4.0]undecene-7 (DBU); thus, those amine compounds in conventional use can be used. These amine compounds may be used singly or two or more of them may be used in combination.

As examples of the ketimine compounds, there may be mentioned compounds represented by the following general formula (9): 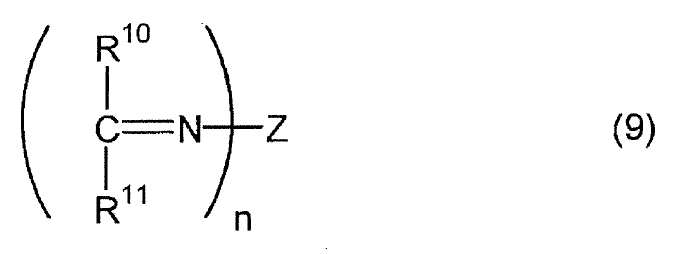 (wherein R¹⁰ and R¹¹ each independently represents a hydrogen atom or a substituted or unsubstituted monovalent organic group containing 1 to 6 carbon atoms, Z represents an organic group containing 1 to 20 carbon atoms and n represents 1, 2 or 3), and those ketimine compounds can be obtained by the condensation reaction between an amine compound and a carbonyl compound.

In synthesizing such ketimine compounds, use may be made of amine compounds and carbonyl compounds each known in the art.

Usable as the amine compounds are, for example, diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine and p,p'-biphenylenediamine; such polyamines as 1,2,3-triaminopropane, triaminobenzene, tris(2-aminoethyl)amine and tetra(aminomethyl)methane; polyalkylenepolyamines such as diethylenetriamine, triethylenetriamine and tetraethylenepentamine; and polyoxyalkylene polyamines.

Usable as the carbonyl compounds are, for example, aldehydes such as acetaldehyde, propionaldehyde, n-butyraldehyde, isobutyraldehyde, diethylacetaldehyde, glyoxal and benzaldehyde; cyclic ketones such as cyclopentanone, trimethylcyclopentanone, cyclohexanone and trimethylcyclohexanone; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone and diisobutyl ketone; and β-dicarbonyl compounds such as acetylacetone, methyl acetoacetate, ethyl acetoacetate, dimethyl malonate, diethyl malonate, methyl ethyl malonate and dibenzoylmethane.

In cases where an imino group occurs in the ketimines, the imino group may be reacted with styrene oxide; a glycidyl ether such as butyl glycidyl ether or allyl glycidyl ether; or a glycidyl ester; and the like. Those ketimine compounds may be used singly or two or more of them may be used in combination.

In the case of incorporating such an epoxy resin curing agent, the addition amount thereof is not particularly restricted but, from the curability viewpoint, the agent is used preferably in an amount of 0.1 to 200 parts by weight, more preferably 1 to 150 parts by weight, per 100 parts by weight of the organic polymer (a).

Usable as the antioxidants are, for example, light stabilizers. As examples of the light stabilizers, there may be mentioned benzotriazoles, hindered amines and benzoate compounds and, among them, hindered amines are particularly preferred. The use of tertiary amine-containing hindered amine light stabilizers as the hindered amine light stabilizers is preferred for improving the storage stability of the composition and, as examples of the tertiary amine-containing hindered amine light stabilizers, there may be mentioned such light stabilizers as TINUVIN 622LD, TINUVIN 144, TINUVIN 770, TINUVIN 327, CHIMASSORB 119FL (all being products of Ciba Specialty Chemicals); MARK LA-57, LA-62, LA-67, LA-63 (all being products of AdekaArgus Chemical Co., Ltd.) ; Sanol LS-765, LS-292, LS-2626, LS-1114 and LS-744 (all being products of Sankyo Co., Ltd.).

Also usable as the antioxidants are ultraviolet absorbers. The weather resistance of the surface of cured products can be enhanced by using an ultraviolet absorber. As examples of the ultraviolet absorber, there may be mentioned benzophenones, benzotriazoles, salicylates, substituted tolyl compounds and metal chelating compounds, among others. Benzotriazoles are particularly preferred, however,

Those antioxidants may be used singly or two or more of them may be used in combination.

In the case of incorporating such an antioxidant, the addition amount thereof is not particularly restricted but, from the cost and effect viewpoint, the antioxidant is used preferably in an amount of 0.01 to 30 parts by weight, more preferably 0.1 to 10 parts by weight, per 100 parts by weight of the organic polymer (a).

For workability improvement and/or viscosity reduction, for instance, a solvent may be incorporated. As the solvent to be used for such purpose, there may be mentioned, among others, aromatic hydrocarbon solvents such as toluene and xylene; ester solvents such as ethyl acetate, butyl acetate, amyl acetate and cellosolve acetate; and ketone solvents such as methyl ethyl ketone and methyl isobutyl ketone.

In the case of incorporating such as a solvent, the addition amount thereof is not particularly restricted but, from the worker exposure viewpoint, the solvent is used preferably in an amount of 0.01 to 300 parts by weight, more preferably 0.1 to 100 parts by weight, per 100 parts by weight of the organic polymer (a).

The above-mentioned production process of the invention can be applied not only to one-pack formulations but also to multiple-pack type curable resin compositions.

The curable resin composition obtained by the production process of the invention is useful as a sealant, adhesive, sprayable material, coatings waterproofing agent, paint, impression material, casting material, foamable material or the like in such fields as buildings, construction works, industrial use, automotive use and general household use.

### (Effects of the invention)

By using the production process of the invention, it is possible to produce curable resin compositions having good thixotropy with good production efficiency. Further, the production process of the invention can reduce not only the period of occupation of the kneader per batch to thereby improve the productivity but also the usage amount of the thixotropic agent to be used, hence has a cost reducing effect. Further, according to the production process of the invention, the composition is packed into containers in a low-viscosity state and thereafter the viscosity thereof can be increased and, therefore, even a high-viscosity product, which is difficult to pack, can be produced with ease.

### BEST MODE FOR CARRYING OUT THE INVENTION

The following examples illustrate the present invention in further detail. They are, however, by no means limitative of the scope of the invention.

### (Example 1)

Intramolecular reactive silyl group-containing polyoxypropylene (number average molecular weight 15,000, Mw/Mn = 1.1; 100 parts by weight) synthesized by the method described in Synthesis Example 1 in International Laid-open Publication WO 91/13928, 200 parts by weight of ground calcium carbonate (product name: ImerSeal 50 (product of IMERYS), 70 parts by weight of diisoundecyl phthalate (product name: JAYFLEX DIUP (product of Exxon Mobil Chemical Company), 20 parts by weight of titanium oxide, 20 parts by weight of a polyamide wax-based thixotropic agent (product name: Crayvallac SL (melting point: 120 to 130 degrees centigrade, product of CRAY VALLEY PRODUCTS Ltd.)) and 2 parts by weight of antioxidants (product names: TINUVIN 770 and TINUVIN 327 (products of Ciba Specialty Chemicals), each 1 part by weight) were mixed together at 50 degrees centigrade and, then, 3 parts by weight of vinyltrimethoxysilane (product name: Silquest A-171 (product of GE Silicones)) as a dehydrating agent, 2 parts by weight of N-β-(aminoethyl)-γ-aminopropyltrimethoxysilane (product name: Silquest A-1120 (product of GE Silicones) as an adhesion promoter and 1 part of dibutyltin diacetylacetonate as a curing catalyst were added, followed by mixing up at 50 degrees centigrade. The mixture obtained was packed into a polyethylene cartridge, aged in an oven controlled at 110 degrees centigrade for 1 hour and then taken out into a room temperature (23 degrees centigrade) atmosphere, whereby a curable resin composition was obtained.

### (Example 2)

A curable resin composition was obtained in the same manner as in Example 1 except that the period of aging in the oven was prolonged to 3 hours.

### (Example 3)

A curable resin composition was obtained in the same manner as in Example 2 except that the oven temperature was controlled at 90 degrees centigrade.

### (Example 4)

A curable resin composition was obtained in the same manner as in Example 2 except that the oven temperature was controlled at 70 degrees centigrade.

### (Example 5)

The same composition was first mixed up in the same manner as in Example 1. Then, the transfer route from stirring vessel to cartridge was heated to 120 degrees centigrade, and the mixture was packed into a cartridge and, then, the cartridge was allowed to stand at room temperature (23 degrees centigrade). A curable resin composition was thus obtained.

### (Example 6)

The same composition was first mixed in the same manner as in Example 1. Then, the transfer route from stirring vessel to cartridges was heated to 120 degrees centigrade, and the mixture was packed into a cartridge and, then, the cartridge was allowed to stand in an oven maintained at 110 degrees centigrade for 1 hour and then taken out of the oven and returned to room temperature (23 degrees centigrade), whereby a curable resin composition was obtained.

### (Comparative Example 1)

The same amounts of the same materials as used in Example 1 were used. Thus, 100 parts by weight of intramolecular reactive silyl group-containing polyoxypropylene (number average molecular weight 15,000, Mw/Mn = 1.1), 200 parts by weight of ground calcium carbonate, 70 parts by weight of diisoundecyl phthalate, 20 parts by weight of titanium oxide, 20 parts by weight of the polyamide wax type thixotropic agent and 2 parts by weight of the antioxidants were mixed up at 110 degrees centigrade, the mixture was cooled to 50 degrees centigrade or below, 3 parts by weight of the dehydrating agent vinyltrimethoxysilane, 2 parts by weight of the adhesion promoter N-β-(aminoethyl)-γ-aminopropyltrimethoxysilane and 1 part by weight of the curing catalyst dibutyltin bisacetylacetate were added, followed by mixing up. The mixture obtained was packed in a polyethylene cartridge. A curable resin composition was thus obtained.

### (Comparative Example 2)

A curable resin composition was obtained in the same manner as in Example 2 except that the oven temperature was controlled at 40 degrees centigrade.

### (Comparative Example 3)

A curable resin composition was obtained in the same manner as in Example 1 except that the aging in oven was omitted.

The curable resin compositions of Examples 1 to 6 and Comparative Examples 1 to 3 as obtained in the above manner were evaluated by the methods given below. The results obtained are shown in Table 1.

The temperature of each curable resin composition in each step was equivalent to the temperature of the kneader, filling line, or oven.

### <Viscosity>

The viscosity was measured at 23 degrees centigrade and at a shear rate of 0.1, 5 or 10 1/s using a Bohlin CVO rheometer (product of Bohlin Instruments, Inc.).

### <Vertical sag resistance>

Measurements were made according to ISO 7390.

### <Adhesion>

Each curable composition was applied to an anodized aluminum substrate and, after 7 days of aging at room temperature (23 degrees centigrade) for curing, the cured product was subjected to hand-peeling for observation of the state of breakage.

**Table 1**

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Kneader | Temperature(°C) | 50 | 50 | 50 | 50 | 50 | 50 | 110 | 50 | 50 |
| | Occupation time (h) | 1 | 1 | 1 | 1 | 1 | 1 | 7 | 1 | 1 |
| Filling line | Temperature(°C) | - | - | - | - | 120 | 120 | - | - | - |
| | Residence time (min.) | - | - | - | - | 5 | 5 | - | - | - |
| Oven | Temperature(°C) | 110 | 110 | 90 | 70 | - | 110 | - | 40 | - |
| | Aging time (h) | 1 | 3 | 3 | 3 | - | 1 | - | 3 | - |
| Viscosity (Pa·s) | Shear rate 0.1 (1/s) | 17000 | 26600 | 14500 | 4580 | 22000 | 24300 | 4240 | 310 | 200 |
| | 5(1/s) | 1000 | 1450 | 870 | 270 | 1300 | 1390 | 280 | 25 | 22 |
| | 10(1/s) | 540 | 780 | 480 | 150 | 650 | 720 | 160 | 15 | 13 |
| Thixotropy | 0.1/10 | 31.5 | 34.1 | 30.2 | 30.5 | 33.8 | 33.8 | 26.5 | 20.7 | 15.4 |
| | 0.1/5 | 17 | 18.3 | 16.7 | 17 | 16.9 | 17.5 | 15.1 | 12.4 | 9.1 |
| Vertical sag resistance (mm) | | 0 | 0 | 0 | 0 | 0 | 0 | 0 | 20< | 20< |
| Adhesion on anodized aluminum | | Cohesive failure | Cohesive failure | Cohesive failure | Cohesive failure | Cohesive failure | Cohesive failure | Cohesive failure | Cohesive failure | Cohesive failure |

As is evident from Table 1, the productivity in Comparative Example 1 representing a conventional process was low because of the long period of occupation of the kneader, which was as long as 7 hours. In Comparative Example 2 in which the heat treatment temperature was lower than the temperature in the mixing step, and in Comparative Example 3, in which no heat treatment was carried out, the thixotropy were poor. The vertical sag resistance was also poor. In Examples 1 to 5 according to the invention, on the contrary, the thixotropy obtained were equal or superior to those attained by the conventional processes in spite of the short kneader occupation period (i.e. 1 hour) and of high production efficiency. Examples 1 to 5 were comparable in adhesiveness to Comparative Example 1. Thus, the production process of the invention is effective in producing curable resin compositions having high thixotropy with good productivity.

### INDUSTRIAL APPLICABILITY

By using the production process of the invention, it is possible to produce curable resin compositions having good thixotropy with good production efficiency. Further, the production process of the invention can reduce not only the period of occupation of the kneader per batch to thereby improve the productivity but also the usage amount of the thixotropic agent to be used, hence has a cost reducing effect. Further, according to the production process of the invention, the composition is packed into containers in a low-viscosity state and thereafter the viscosity thereof can be increased and, therefore, even a high-viscosity product, which is difficult to pack, can be produced with ease.

## Claims

1. A process for producing a curable resin composition
which comprises at least two steps, namely the mixing step (A) of mixing an organic polymer (a) having at least one reactive silyl group in each molecule with a thixotropic agent (b) and the filling step (B) of packing the mixture obtained in the above step (A) into containers, and
the mixture is subjected to heat treatment at a temperature exceeding the temperature in the mixing up in the above step (A) in the filling step (B) and/or after the filling step (B).

2. The process for producing a curable resin composition according to Claim 1
wherein the heat treatment step (C) of heating the containers filled with the mixture is carried out after the filling step (B) in order to subject the mixture to heat treatment.

3. The process for producing a curable resin composition according to Claim 1
wherein the mixture is subjected to heat treatment in the filling step (B).

4. The process for producing a curable resin composition according to Claim 1
wherein the heat treatment is carried out in the filling step (B), and then the heat treatment step (C) of heating the containers filled with the mixture is carried out after the filling step (B) in order to subject the mixture to heat treatment.

5. The process for producing a curable resin composition according to any one of Claims 1 to 4
wherein the temperature of the curable resin composition on the occasion of mixing in the mixing step (A) is not higher than 80 degrees centigrade.

6. The process for producing a curable resin composition according to any one of Claims 1 to 5
wherein the heat treatment is carried out such that the temperature of the curable resin composition during heat treatment be not lower than 50 degrees centigrade.

7. The process for producing a curable resin composition according to any one of Claims 1 to 6
wherein the heat treatment is carried out such that the temperature of the curable resin composition during heat treatment be not higher than the melting point of the thixotropic agent (b).

8. The process for producing a curable resin composition according to any one of Claims 1 to 7
wherein the thixotropic agent (b) is a polyamide wax and/or a polyamide wax derivative.

9. The process for producing a curable resin composition according to any one of Claims 1 to 8
wherein the main chain skeleton of the organic polymer (a) is a polyoxyalkylene polymer.
